# EUROPEAN PATENT APPLICATION

(11) **EP 4 411 906 A1**
(43) Date of publication of application: **07.08.2024**
(21) Application number: 23154542.7
(22) Date of filing: 01.02.2023
(51) Int. Cl.: H01M 10/04, H01M 10/052, H01M 50/105, H01M 50/124, H01M 50/609, H01M 50/673

(54) **METHOD FOR MANUFACTURING A BATTERY CELL WITH A POUCH HOUSING**

(71) Applicant: Cellforce Group GmbH, 72072 Tübingen (DE)
(72) Inventor: Gräf, Jürgen, 72072 Tübingen (DE)

(57) **Abstract**

The invention relates to a method (50) for manufacture a battery cell (100), wherein a battery cell housing blank (10) with a first side (11) and a second side (12) is provided, wherein the first side (11) and the second side (12) are connected by a folding edge (30), wherein a first cavity (31) is formed or provided at the first side (11) and a second cavity (32) is formed or provided at the second side (12), and wherein the first side (11) and/or the second side (12) comprises at least one third cavity (33), wherein the first side (11) and the second side (12) are folded along the folding edge (30) and wherein the first side (11) and the second side (12) are sealed along at least two edges abutting against the folding edge (30) with a remaining opening (15), wherein battery cell components (200) are placed inside a space (14) formed by the first cavity (31) and/or the second cavity (32) and an electrolyte solution (110) is filled into the first cavity (31), the second cavity (32) and the at least one third cavity (33), wherein the opening (15) is sealed or closed after filling of the electrolyte solution (110), wherein gaseous components are vented into the at least one third cavity (33). Furthermore, the invention relates to a battery cell housing blank (10), to a manufacturing state battery cell (20) and to an electrochemical cell (100).

## Description

The present disclosure relates to a method for manufacture a battery cell, especially a battery cell with pouch type housing. Moreover, the present disclosure relates to a battery cell housing blank and to a battery cell housing during a manufacturing of a battery cell or so-called "manufacturing state battery cell" and to an electrochemical cell.

Lithium-ion batteries are used in different technical fields and provide stored energy to electrical components like electrical motors, displays etc. Especially in electric vehicles and in hybrid electric vehicles such lithium-ion batteries are supplying the vehicle components and the drivetrain with electrical energy. There is constant development of the lithium-ion batteries towards higher capacities. The capacity of the battery may be increased by increasing the surface area of the electrodes. This is achieved by more complex surface structures.

During the manufacturing of the lithium-ion batteries battery cell housings are provided and equipped with the usual battery components e.g. anode structure, cathode structure and separator structure. The battery cell housings are then filled with an electrolyte solution which is absorbed by the battery components. This manufacturing step requires multiple refills of the electrolyte solution and may last hours or days depending on the battery cell characteristics. The battery cell housings are usually open to the environment during this waiting time until full absorption of the electrolyte solution.

Thus, for a mass production of such battery cells large storage or manufacturing areas are required which fulfil high standards in order to prevent any contamination especially of pouch type battery cells by dust and aerosols. Such storage or manufacturing areas are complex, expensive to build and maintain and do increase the manufacturing costs of battery cells.

An objective of the present disclosure is to provide a method for manufacture a battery cell, a battery cell housing blank and a manufacturing state battery cell which allows absorption of electrolyte solution by battery cell components over an extended period of time without the risk of contamination or battery housing degradation. This object is achieved by the subject-matter of the independent claims. Further developments of the subject-matter of the independent claims are provided in the sub-claims.

According to one aspect of the present disclosure a method for manufacture a battery cell is provided. In a step of the method a cell housing blank with a first side and a second side is provided. The first side and the second side are connected by a folding edge. A first cavity is formed or provided at the first side and a second cavity is formed or provided at the second side of the cell housing blank.

The first side and/or the second side comprises at least one third cavity. For example one third cavity may be disposed at the first side and one optional third cavity may be disposed at the second side of the battery cell housing blank. The battery cell housing black may be formed as a single-layer or multi-layer foil which may contain aluminum and plastic materials.

The first side and the second side are folded along the folding edge and the first side and the second side are sealed along at least two edges abutting against the folding edge such that a bag with an opening is formed.

In a further step, battery cell components are placed inside a space formed by the first cavity and the second cavity.

The battery cell components may be placed into the first cavity and/or into the second cavity prior to folding and sealing or after folding and sealing of the cell housing blank or foil. Moreover the battery cell components, especially the anode and cathode layers may be contacted by conductors prior to folding and sealing in order to enable electrical connection at the exterior of the battery cell blank.

In a further step an electrolyte is filled into the first cavity, the second cavity and the at least one third cavity. The opening is sealed or closed after filling of the electrolyte. The opening can be closed by providing one or multiple folds, by clamping, closing a zip and the like.

Gaseous components are vented during the absorption process into the at least one into the at least one third cavity.

Based on the arrangement of the first, second and third cavities, the first cavity may face the second cavity in a folded state of the cell housing blank. Also two third cavities may face each other in a folded state of the cell housing blank, too. Thus, a first space may be defined by the first and the second cavity in order to incorporate the battery cell components and a second space may be formed by two adjacent third cavities in order to incorporate a part of the electrolyte solution.

Since the entire interior of the battery cell housing is closed after filling of the electrolyte solution, any contamination of the inside cavities and of the battery components inside the battery housing is prevented. Thus, the storage area or manufacturing area where the battery cells are stored during the absorption time of the electrolyte is no longer required to fulfil high standards. Thus, the manufacturing sites may be less expensive to build and maintain such that the manufacturing effort and manufacturing costs of battery cells can be reduced.

The filling of the electrolyte solution may be technically simplified, if the electrolyte solution is filled inside a space between the battery cell components and the cell housing blank within the first cavity and the second cavity via the at least one third cavity. Thus, no complex infill mechanism is required to apply the electrolyte solution into the battery cell housing. Moreover, providing any holes or perforations into the battery cell housing cavities for infill of the electrolyte solution is not required.

According to a further embodiment, after complete soaking of the electrolyte by the battery cell components any remaining electrolyte is conducted into the at least one third cavity. Such step may be performed by a pressure difference between the interior of the battery cell housing and/or by gravity force e.g. by rotating the entire arrangement.

The at least one third cavity is removed by providing a second sealing in a space formed between the third cavity and the first and second cavity. Such second sealing may be a heat sealing which at the same time laminates and closes the space formed by the second and first cavity and cuts off the at least one third cavity. Alternatively after providing the second sealing a cut may be performed in order to remove the third cavity and to form the final battery cell or electrochemical cell. Thus, the second sealing is provided such that an opening area between the edges sealed by the first sealing is closed at least partially.

The degassing of interior of the battery cell housing blank may be accelerated and simplified, if the first side and/or the second side comprises at least one third cavity and at least one forth cavity, wherein gaseous components are vented into the at least one fourth cavity and/or into the at least one third cavity. Thus, beside the third cavity, the fourth cavity may incorporate gaseous components.

According to a further embodiment, after conducting the remaining electrolyte into the at least one third cavity, the cell housing blank in the area of the first cavity and the second cavity converges against the cell housing components. This mechanism may support the transport of the remaining electrolyte solution into the third cavity. By providing a higher pressure at the exterior side of the battery cell housing, the material of the battery cell housing is pressed against the battery cell components such that any excess of the electrolyte solution is not able to remain in the first cavity and/or the second cavity. This measure ensures a battery cell size as compact as possible and prevents wastage of electrolyte solution. Thus, the manufacturing costs may be further optimized if the electrolyte solution guided into the third cavity is re-used or recycled.

The escape of the gaseous components from the interior of the battery cell housing can be provided in a controlled manner, if in the at least one fourth cavity accumulated gaseous components are removed by forming at least one third sealing which removes the at least one fourth cavity from the at least one third cavity. After performing the at least one third sealing, the at least one fourth cavity can be perforated in order to enable escape of the gaseous components. Alternatively or additionally the fourth cavity which can be disposed after cut off.

According to a further embodiment, the at least one first sealing, at least one second sealing and/or the at least one third sealing is formed as a heat sealing by applying heat to a predefined line or an area or a path. Such measure enables a technically simple joining of the two sides of the battery cell housing blank.

Based on a further aspect of the invention a battery cell housing blank is provided. The battery cell housing blank may be formed as a single or multilayer foil or sheet. The battery cell housing blank may contain aluminum or an aluminum alloy.

The battery cell housing blank is configured for forming a battery cell housing of a pouch type, and comprises a first side and a second side. A first cavity is formed at the first side and a second cavity is formed at the second side. A folding edge is separating the first side from the second side. The first side and/or the second side comprise at least one third cavity which is spaced from the first cavity and/or the second cavity along a height axis.

The first side is formed as a first end section and the second side is formed as a second end section of the battery cell housing blank. The first end section and the second end section are separated by the folding edge which initially may be defined as a hypothetical line or a line with perforations for improved folding capability.

After folding the first end section along the folding edge or folding line, the first end section and the second end section are forming a first side and the second side of the Battery cell housing and are joined together in order to enclose the cavities at least partially and form multiple spaces for different tasks and components.

The first and second cavities are provided for incorporating battery cell components and the at least one third cavity e.g. is configured for temporarily incorporating the electrolyte solution and for receiving gaseous components.

In an embodiment of the battery cell housing blank, the second cavity is arranged relative to the first cavity in such a manner that the second cavity is mirrored from the first cavity with the folding edge acting as a mirror axis. Thus, the first cavity is identically formed and positioned to the second cavity. After folding the first side and the second side of the battery cell housing blank, both sides are separated or connected with each other by a folding plane which extends from the folding edge.

In a folded state of the battery cell housing blank, the first cavity may face the second cavity such that the space is symmetrically shaped relative to the folding plane. Such arrangement of the cavities may provide a structurally stable space for incorporating the battery cell components with a joining plane or joining line extending along the centered folding plane.

The venting of the battery cell components and of the electrolyte solution during the manufacturing of the battery cell may be improved if the first side and/or the second side comprises at least one fourth cavity. Thus, the gaseous components may escape into the fourth cavity first. In a possible step, multiple venting procedures may be provided by removing the fourth cavity by applying thermal sealing between the fourth cavity and the third cavity. The encapsulated gaseous components inside the fourth cavity may be released by perforating the fourth cavity after providing a third sealing. Additionally, further released gaseous components may be vented into a further fourth cavity or into the third cavity which may also be removed from the first and second cavities in further steps

In a further embodiment, the at least one fourth cavity is arranged spaced from the at least one third cavity along the height axis and/or across the height axis. Thus, the distance between the third and the fourth cavity may be utilized for providing a heat sealing which also acts as encapsulation and cutting plane. By providing a heat sealing the first and the second side of the battery cell housing blank are locally melted and joined along the sealing or sealing trajectory.

Recycling or re-use of the excess of electrolyte solution may be realized by perforating the removed fourth and/or third cavities.

The at least one fourth cavity may be arranged especially space-saving if the fourth cavity is formed in at least one corner of the cell housing blank. Thus, the fourth cavity may comprise a triangular shape and the third cavity may comprise diagonally formed borders or edges which are facing the fourth cavity in order to ensure optimum fit of both, the third and the fourth, cavities in a pre-defined area of the battery cell housing blank.

Based on a further embodiment, the at least one third cavity is formed adjacent to an edge of the first side and/or an edge of the second side forming an opening for electrolyte infill. Thus, the battery cell components may be positioned technically easy after joining the first and the second sides of the battery cell housing blank via the opening. Furthermore, the electrolyte solution may also be introduced into the space via the opening without the requirement for specific tools or infill ports.

The space for incorporation of the battery cell components may provide facilitated positioning via the opening, if the first cavity and/or the second cavity are formed as truncated pyramids. Thus, the initial volume of the space is increased and provides the possibility for automatic positioning of the battery cell components into the space.

After applying the electrolyte solution, the additional volume provided by the shape of the first and/or the second cavities enables accelerated adsorption of the electrolyte solution since it reaches all parts of the battery cell components within a reduced period of time.

In a further embodiment of the battery cell housing blank, a space between the at least one third cavity and the at least one fourth cavity for providing a third seal passes in a beveled manner such that by removing the at least one fourth cavity at least one edge of the battery cell housing blank is removed along the third seal together with the at least one fourth cavity. This method enables space-saving arrangement of the cavities within the battery cell housing blank. Moreover, multiple ventings are possible by removing multiple cavities filled with gaseous components.

Based on a further aspect of the invention, a manufacturing state battery cell comprising the inventive cell housing blank is provided. The cell housing blank is folded along the folding edge and e.g. joined via the first sealing in order to form a housing bag.

Depending on the layer architecture of the battery cell housing bag at least two surfaces of the first and the second sides can be glued or melted together within one layer which might for example be formed as a plastic e.g. PP, PVC, HDPE, nylon.

The manufacturing state battery cell is a battery cell during a manufacturing which requires absorption of the electrolyte and modifications to the housing bag in order to reach the final or finished battery cell state. The housing may be formed from one layer or multiple layers. For example aluminum may be utilized as one layer of the housing. The housing may be formed as a pouch type housing for example.

The housing bag comprises at least one space which incorporates the battery cell components. The battery cell components may comprise an anode, a cathode and a separator which are winded or folded in order to increase the active areas of these components.

An electrolyte solution is filled into the at least one space with the positioned battery cell components and into the at least one third cavity. The third cavity act as a buffer cavity and provides an excess of the electrolyte solution in order to prevent additional refills of the electrolyte solution with the common risks of contamination or in order to minimize the amount of refills with the electrolyte solution.

Based on an embodiment a vacuum or a reduced pressure is applied to the space and the at least one third cavity before or after the electrolyte solution is introduced into the housing bag. Then the opening of the housing bag may be sealed or closed.

The at least one third cavity is connected with the space containing the battery cell components, such that the excess of the electrolyte solution may flow directly to the battery cell components if required. The at least one third cavity is configured to incorporate gaseous components during manufacturing of the battery cell. Thus, the third cavity fulfills multiple tasks by providing a buffer volume of the electrolyte solution and by providing a volume for incorporation of ascending gaseous components.

Such manufacturing state battery cell may comprise an opening which is closed after filling the electrolyte solution. After the lapse of a defined period of time, the third cavity may be removed from the housing bag by providing a second sealing between the third cavity and the space with the battery cell components. This period of time is preferably a duration until full soaking or adsorption of the electrolyte solution by the battery cell components.

The amount or volume of the electrolyte solution which is adsorbed by the battery cell components is defined and limited by the battery cell components and e.g. their size and materials. Preferably after full soaking or adsorption of the electrolyte solution by the battery cell components an excess amount of the electrolyte solution may remain inside the third cavity.

By proceeding time, the section of the third cavity with the electrolyte solution will decrease such that the possible volume of the gaseous components is increased at the same time. Thus an exchange of electrolyte solution and gaseous components may take place such that venting or bleeding of the third cavity may be omitted.

In a further aspect of the invention an electrochemical cell, which is formed by an inventive method, is provided. The electrochemical cell may be formed as a battery cell. Especially, the electrochemical cell may be formed as a lithium-ion battery cell.

The electrochemical cell comprises a pouch type battery cell housing with a space defined by a first cavity and/or a second cavity which incorporates battery cell components. The space is sealed by at least one first sealing and at least one second sealing defining the edges of the battery cell housing.

The present disclosure will be explained in more detail below on the basis of schematic embodiments shown in the accompanying drawings:
- Fig. 1A: shows a perspective view of an exemplary battery cell housing blank according to an embodiment of the invention,
- Fig. 1B: shows a sectional view of a first cavity of Fig. 1A,
- Fig. 2: shows an exemplary manufacturing state battery cell according to an embodiment of the invention,
- Fig. 3A: shows an exemplary manufacturing state battery cell according to a further embodiment of the invention,
- Fig. 3B: shows the manufacturing state battery cell of the embodiment of Fig. 3A with visualized possible sealing areas, and
- Fig. 4: shows an exemplary diagram illustrating a method for manufacturing a battery cell in accordance with an embodiment of the invention.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

Unless the context requires otherwise, throughout the present specification and claims, the word "comprise" and variations thereof, such as, "comprises" and "comprising" are to be construed in an open, inclusive sense, that is, as "including, but not limited to". In the present description, any concentration range, percentage range, ratio range, or integer range is to be understood to include the value of any integer within the recited range and, when appropriate, fractions thereof (such as one tenth and one hundredth of an integer), unless otherwise indicated. As used herein, the terms "about" and "approximately" mean ± 20%, ± 10%, ± 5% or ± 1% of the indicated range, value, or structure, unless otherwise indicated. It should be understood that the terms "a" and "an" as used herein refer to "one or more" of the enumerated components. The use of the alternative (e.g., "or") should be understood to mean either one, both, or any combination thereof of the alternatives.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless defined otherwise, all technical and scientific terms used herein have the same meaning as is commonly understood by one of skill in the art to which this disclosure belongs. As used in the specification and claims, the singular form "a", "an" and "the" includes plural references unless the context clearly dictates otherwise.

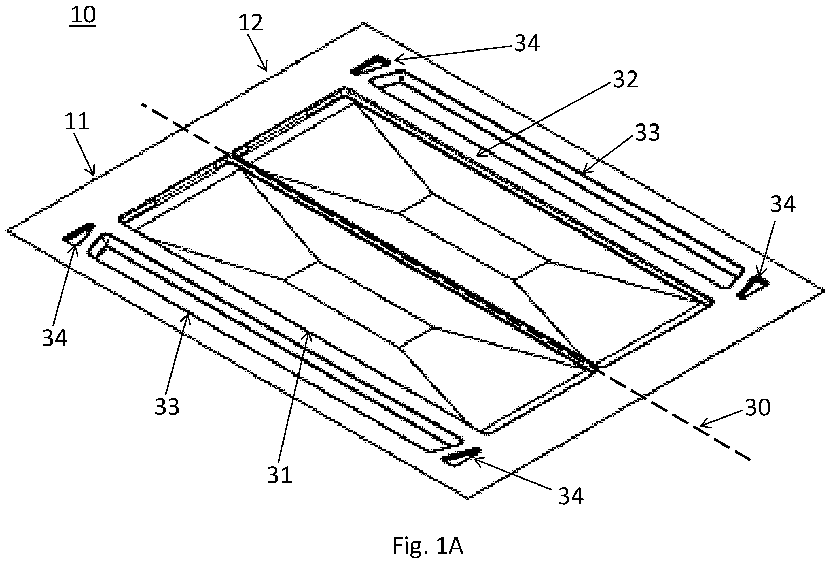

Fig. 1A shows a perspective view of an exemplary battery cell housing blank 10 according to an embodiment of the invention. The exemplary shown battery cell housing blank 10 is formed as a multilayer foil. The battery cell housing blank 10 contains aluminum or an aluminum alloy as a layer facing to the outside / away from the shown area of the battery cell housing blank 10. A further layer of the battery cell housing blank 10 may be formed as plastic e.g. PP, PVC, HDPE, nylon. Such layer may be configured as an inner layer and is arranged at the visible part of the battery cell housing blank 10 in Fig. 1A.

The battery cell housing blank 10 is configured for forming a battery cell housing / housing bag 20 of a pouch type, and comprises a first side 11 and a second side 12. A first cavity 31 is formed at the first side 11 and a second cavity 32 is formed at the second side 12 of the battery cell housing blank 10.

A folding edge 30 is separating the first side 11 from the second side 12. The folding edge 30 is arranged symmetrical and divides the battery cell housing blank 10 into two equally sized sides or sections 11, 12.

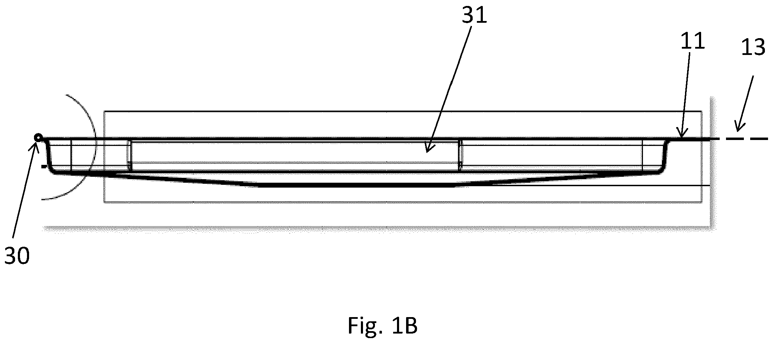

The first cavity 31 and the second cavity 32 are formed as truncated pyramids. This shape is illustrated in Fig. 1B in a sectional view of a first cavity 11. Based on the shown example, the first cavity 31 and the second cavity 32 comprise same sizes and shapes. However, the invention is not limited to the shown exemplary embodiment. The first cavity 31 and the second cavity 32 may comprise different sizes, shapes and positions within the first side 11 and the second side 12.

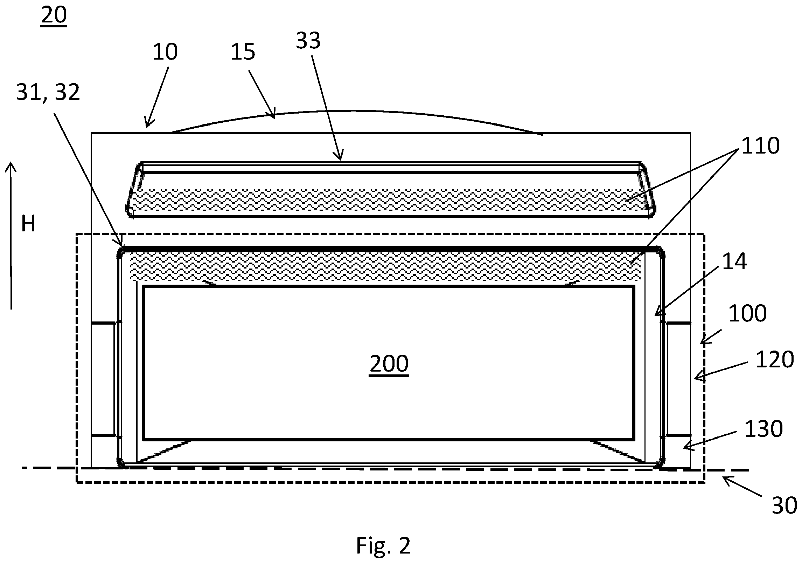

In the shown embodiment, the first side 11 and the second side 12 both comprise one third cavity 33 which are positioned spaced from the first cavity 31 and the second cavity 32 along a height axis H. The height axis H is for example shown in Fig. 2.

Moreover, the first side 11 and the second side 12 each comprises two fourth cavities 34. The fourth cavities 34 are arranged spaced from the third cavities 33 along the height axis H and across the height axis H.

The fourth cavities 34 comprise a triangular shape and are located in the four outer edges of the battery cell housing blank 10. The third cavities 33 comprise diagonally formed borders which are facing the fourth cavities 34 in order to ensure optimum fit. Moreover, the third cavities 33 are located near the outer edges in direction of the height axis H.

All the cavities 31, 32, 33, 34 located at the first side 11 are formed identically to the cavities 31, 32, 33, 34 located at the second side 12 in this exemplary embodiment. The cavities 31, 32, 33, 34 comprise a tray or shell like form which protrudes from a joining plane 13 of the battery cell housing blank 10.

In order to form a manufacturing state battery cell 20, the battery cell housing blank 10 is folded along the folding edge 30 such that the first side 11 and the second side 12 are positioned next to each other. A plane between the fist side 11 and the second side 12 is defined as the joining plane 13 which also crosses the folding edge 30. The joining plane 13 is shown in Fig. 1A.

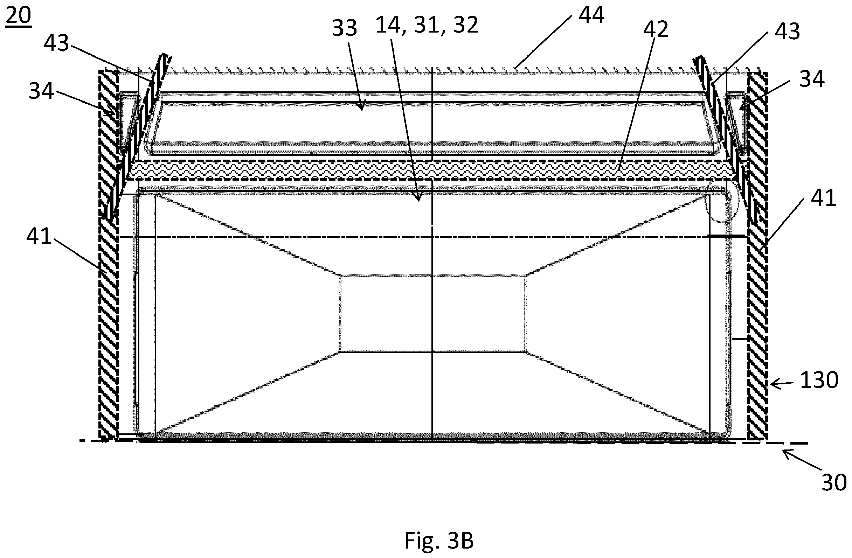

Fig. 2 shows an exemplary manufacturing state battery cell 20 according to an embodiment of the invention. The cell housing blank 10 is folded along the folding edge 30 and e.g. joined via first sealings 41 (see Fig. 3B) in order to form a housing bag.

The manufacturing state battery cell 20 is a battery cell 100 during a manufacturing which requires absorption of the electrolyte 110 and modifications to the housing bag in order to reach the final or finished battery cell state.

The housing bag comprises at least one space 14 which incorporates battery cell components 200. The battery cell components 200 may comprise an anode, a cathode and a separator which are winded or folded in order to increase the active areas of these components.

After filling the electrolyte solution 110 into the space 14 with the positioned battery cell components 200 and into the third cavities 33, an opening 15 of the housing bag is closed thus forming the manufacturing state battery cell 20. Preferably, between the third cavities 33 and the space 14 a fluid connection may remain.

The battery cell components 200 are positioned inside e.g. the first cavity 31 such that their poles 120 may be conducted to the outside of the battery cell housing blank 10. The poles 120 act as electrical connections to the anodes and cathodes of the battery cell components 200 and are joined together with the first side 11 and the second side 12 along the joining plane 13.

Due to the shape of the first cavity 31 and the second cavity 32 the initial volume of the space 14 is increased and provides the possibility for simplified positioning of the battery cell components 200 into the space 14. In the shown embodiment, the manufacturing state battery cell 20 does not comprise further cavities.

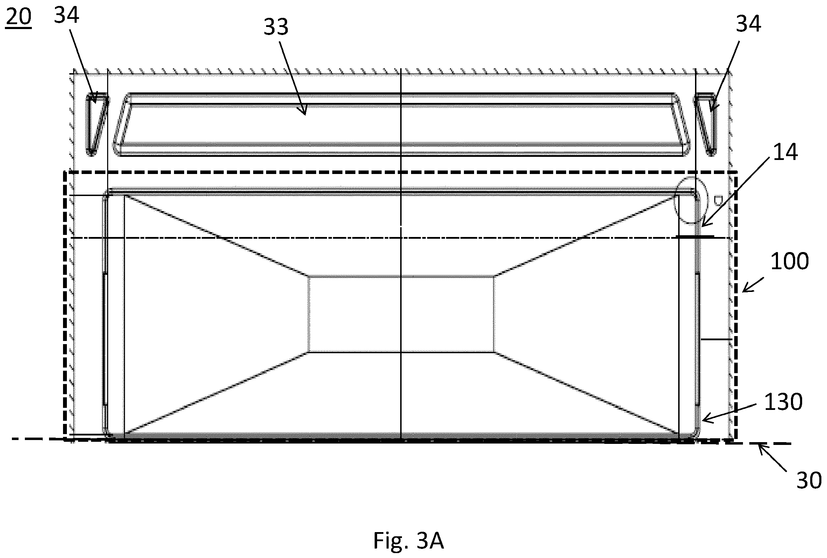

Fig. 3A shows an exemplary manufacturing state battery cell 20 according to a further embodiment of the invention. In contrast to the embodiment shown in Fig. 2, the manufacturing state battery cell 20 here is formed by folding and joining the battery cell housing blank 10 shown in Fig. 1A with the fourth cavities 34. Thus, after joining the sides 11, 12 of the battery cell housing blank 10, the four fourth cavities 34 are forming two additional spaces which are connected with the third cavities 33 and the space 14 with the battery cell components 200.

These fourth cavities 34 enable additional venting possibilities if required by the manufacturing process of the battery cell 100.

In order to provide a simplified overview, in Fig. 3A and Fig. 3B the battery cell components 200, the electrolyte 110 and the poles 120 are not shown. Moreover, the final battery cell 100 and its dimensions are schematically visualized in Fig. 2, Fig. 3A and Fig. 3B. The final battery cell 100 is provided after cutting away the third cavities 33 and the fourth cavities 34 (if available) such that solely the space 14 with the battery cell components 200 remains in a sealed manner with the poles protruding through the battery cell housing 130.

The battery cell housing 130 is formed by the remaining part of the battery cell housing blank 10 after removing the third cavities 33 and the fourth cavities 34 and sealing the space 14.

In order to form a housing bag which is fillable with the electrolyte solution 110, the folded battery cell housing blank 10 requires first sealings 41. Fig. 3B shows the manufacturing state battery cell 20 of the embodiment of Fig. 3A with visualized possible sealing areas or sealings.

In the described embodiment all sealings are formed as heat sealings which are temporary melting parts of the first side 11 and the second side 12 in the area of the joining plane 13.

By providing the first sealings 41 at two opposite edges the battery cell housing bag is formed, which is able to hold the electrolyte solution 110.

An opening 15 of the battery cell housing bag is closed by performing a fourth sealing 44 at the top most edge. After this step, the manufacturing state battery cell 20 may be formed.

After the lapse of a defined period of time, the third cavities 33 may be removed from the housing bag or the manufacturing state battery cell 20 by providing a second sealing 42 between the third cavities 33 and the space 14 with the battery cell components 200. Thus the entire upper part of the manufacturing state battery cell 20 may be removed from the space 14. This step also forms the final battery cell 100.

The escape of the gaseous components from the interior of the space 14 can be provided in a controlled manner, if in the fourth cavities 34 accumulated gaseous components are removed by forming at least one third sealing 43 which removes at least one fourth cavity 34 from the third cavities 33. This step has to be performed prior to the second sealing 42.

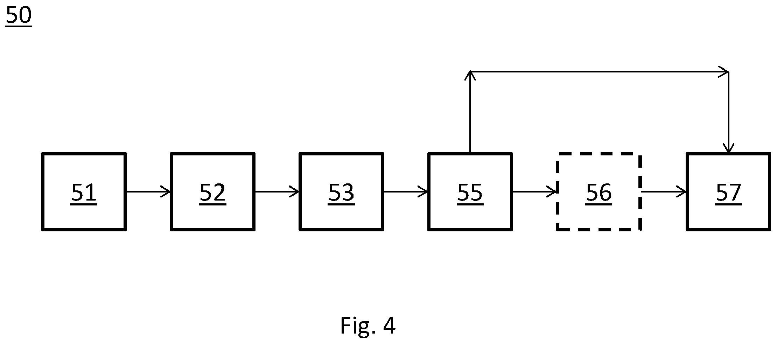

In Fig. 4 an exemplary diagram illustrating a method 50 for manufacturing a battery cell 100 in accordance with an embodiment of the invention is shown. In a first step 51 of the method 50 a battery cell housing blank 10 with the first side 11 and the second side 12 is provided.

The battery cell components 200 are positioned in the first cavity 31 and/or the second cavity 32 in a further method step 52. The poles 120 electrically connecting the battery cell components 200 are overlapping the edges of the first cavity 31 and/or the second cavity 32.

Then, the battery cell housing blank 10 is folded 53 along the folding edge 30 and the first sealings 41 are performed in order to enclose the battery cell components 200 in the space 14 formed by the first cavity 31 and the second cavity 32.

The entire battery housing bag is enclosed 55 via a fourth sealing 44 after injecting 55 the electrolyte solution 110 into the housing bag. Thus, the manufacturing state battery cell housing 20 is formed.

During the following waiting period, gaseous components may vent from the space 14 into the fourth cavities 34 and the third cavities 33. Thus, in an optional step 56 the fourth cavities 34 may be sealed via third sealings 43 and removed from the third cavities 33. This step 56 may be performed multiple times depending on the amount of fourth cavities 34.

After lapse of the period of time and after finishes absorption of the electrolyte solution 110 by the battery cell components 200, the second sealing 42 is applied and the third cavities 33 are removed 57 from the manufacturing state battery cell housing 20 while forming the finished battery cell 100.

## Claims

1. A method (50) for manufacture a battery cell (100), wherein a battery cell housing blank (10) with a first side (11) and a second side (12) is provided, wherein the first side (11) and the second side (12) are connected by a folding edge (30), wherein a first cavity (31) is formed or provided at the first side (11) and a second cavity (32) is formed or provided at the second side (12), and wherein the first side (11) and/or the second side (12) comprises at least one third cavity (33), wherein the first side (11) and the second side (12) are folded along the folding edge (30) and wherein the first side (11) and the second side (12) are sealed along at least two edges abutting against the folding edge (30) with a remaining opening (15), wherein battery cell components (200) are placed inside a space (14) formed by the first cavity (31) and/or the second cavity (32) and an electrolyte solution (110) is filled into the first cavity (31), the second cavity (32) and the at least one third cavity (33), wherein the opening (15) is sealed or closed after filling of the electrolyte solution (110), wherein gaseous components are vented into the at least one third cavity (33).

2. Method according to claim 1, wherein the electrolyte solution (110) is filled inside a space (14) between the battery cell components (200) and the cell housing blank (10) within the first cavity (31) and the second cavity (32) via the at least one third cavity (33).

3. Method according to claim 1 or 2, wherein after complete soaking of the electrolyte solution (110) by the battery cell components (200) any remaining electrolyte solution (110) is conducted into the at least one third cavity (33), wherein the at least one third cavity (33) is removed by providing a second sealing (42) in a space formed between the third cavity (33) and the first (31) and second cavity (32), wherein the second sealing (42) is distancing the third cavity (33) from the first (31) and second cavity (32) and/or wherein the second sealing (42) provides a cut for removing the at least one third cavity (33) from a battery cell housing (130).

4. Method according to anyone of the claims 1 to 3, wherein the first side (11) and/or the second side (12) comprises at least one third cavity (33) and at least one forth cavity (34), wherein gaseous components are vented into the at least one fourth cavity (34) and/or into the at least one third cavity (33).

5. Method according to claim 3, wherein after conducting the remaining electrolyte solution (110) into the at least one third cavity (33), the cell housing blank (10) in the area of the first cavity (31) and the second cavity (32) converges against the battery cell housing components (200).

6. Method according to anyone of the claims 4 or 5, wherein in the at least one fourth cavity (34) accumulated gaseous components are removed by forming at least one third sealing (43) which removes the at least one fourth cavity (34) from the at least one third cavity (33).

7. Method according to anyone of the claims 1 to 6, wherein at least one first sealing (41), at least one second sealing (42) and/or the at least one third sealing (43) is formed as a heat sealing by applying heat to a predefined line or an area or a path.

8. A battery cell housing blank (10), especially formed as a single or multilayer foil or sheet, configured for forming a battery cell housing (130) of a pouch type, comprising a first side (11) and a second side (12), wherein a first cavity (31) is formed at the first side (11) and a second cavity (32) is formed at the second side (12), wherein a folding edge (30) is separating the first side (11) from the second side (12), wherein the first side (11) and/or the second side (12) comprises at least one third cavity (33) which is spaced from the first cavity (31) and/or the second cavity (32) along a height axis (H).

9. Battery cell housing blank according to claim 8, wherein the second cavity (32) is arranged relative to the first cavity (31) in such a manner that the second cavity (32) is mirrored from the first cavity (31) with the folding edge (30) acting as a mirror axis.

10. Battery cell housing blank according to claim 8 or 9, wherein the first side (11) and/or the second side (12) comprises at least one fourth cavity (34), wherein the at least one fourth cavity (34) is arranged spaced from the at least one third cavity (33) along the height axis (H) and/or across the height axis (H), wherein the at least one fourth cavity (34) is formed in at least one corner of the cell housing blank (10).

11. Battery cell housing blank according to anyone of the claims 8 to 10, wherein the at least one third cavity (33) is formed adjacent to an edge of the first side (11) and/or an edge of the second side (12) forming an opening (15) for electrolyte solution (110) infill.

12. Battery cell housing blank according to anyone of the claims 8 to 11, wherein the first cavity (31) and/or the second cavity (32) are formed as truncated pyramids.

13. Battery cell housing blank according to anyone of the claims 10 to 12, wherein a space between the at least one third cavity (33) and the at least one fourth cavity (34) for providing a third sealing (43) passes in a beveled manner such that by removing the at least one fourth cavity (34) at least one edge of the battery cell housing blank (10) is removed along the third sealing (43) together with the at least one fourth cavity (34).

14. A manufacturing state battery cell (20) comprising a cell housing blank (10) according to anyone of the claims 8 to 13, folded and joined to a housing bag, comprising at least one space (14) which incorporates battery cell components (200), especially an anode, a cathode and a separator, and comprising an electrolyte solution (110) which is filled inside the at least one space (14) with battery cell components (200) and at least one third cavity (33), wherein the at least one third cavity (33) is connected with the space (14) containing the battery cell components (200), wherein the at least one third cavity (33) is configured to incorporate gaseous components during manufacturing of the battery cell (100).

15. Electrochemical cell (100), which is formed by a method (50) according to anyone of the claims 1 to 7, comprising a pouch type battery cell housing (130) with a space (14) defined by a first cavity (31) and/or a second cavity (32) which incorporates battery cell components (200), wherein the space (14) is sealed by at least one first sealing (41) and at least one second sealing (42) defining the edges of the battery cell housing (130).
